Europäisches Patentamt

European Patent Office

Office européen des brevets

(19)

(11) Veröffentlichungsnummer: **0 1 1 9 501**
**B1**

(12) **EUROPÄISCHE PATENTSCHRIFT**

(45) Veröffentlichungstag der Patentschrift:
20.04.88

(51) Int. Cl.⁴: **C 22 C  9/05,** C 22 C  9/06,
G 02 C  5/00

(21) Anmeldenummer: **84101776.7**

(22) Anmeldetag: **21.02.84**

(54) **Verwendung einer aushärtbaren Kupfer-Nickel-Mangan-Legierung als Werkstoff zur Herstellung von Brillenteilen.**

(30) Priorität: **16.03.83  DE 3309365**

(43) Veröffentlichungstag der Anmeldung:
**26.09.84 Patentblatt 84/39**

(45) Bekanntmachung des Hinweises auf die Patenterteilung:
**20.04.88 Patentblatt 88/16**

(84) Benannte Vertragsstaaten:
**AT FR GB**

(56) Entgegenhaltungen:
**FR - A - 2 086 935**
**US - A - 2 234 552**
**US - A - 2 829 970**

**Der Augenoptiker, Heft 8 (1980) S. 20-24**

(73) Patentinhaber: **VACUUMSCHMELZE GMBH, Grüner Weg 37 Postfach 2253, D-6450 Hanau 1 (DE)**

(72) Erfinder: **Hausch, Gernot, Dr., Leipziger Strasse 45, D-6456 Langenselbold (DE)**

## Beschreibung

Die Erfindung betrifft die Verwendung einer aushärtbaren Kupfer-Nickel-Mangan-Legierung als Werkstoff für die Herstellung von Brillenteilen, der ein feinkörniges Gefüge mit einer maximalen Korngrösse von 0,015 mm aufweist.

Aus der DE-AS 1 170 652 sind Kupfer-Nickel-Mangan-Legierungen als Werkstoff zur Herstellung von geglühten Werkstücken mit hoher Dämpfungsfähigkeit bekannt, wie z.B. Kurbel- und Nockenwellen. Diese aus 18 bis 22 Gew.% Nickel, 18 bis 22 Gew.% Mangan, Rest Kupfer mit einem Reinheitsgrad von 99% bestehenden Werkstoffe können bis zu insgesamt 1% die Elemente Eisen, Silizium, Aluminium, Zink, Beryllium, Titan, Chrom und Vanadium als unabsichtliche Verunreinigung enthalten.

In der Fachzeitschrift «Der Augenoptiker», Heft 8/80, Seiten 20 bis 24 und Heft 9/80, Seiten 8 bis 15, wird ferner u.a. eine aushärtbare Legierung aus 20 Gew.% Nickel, 20 Gew.% Mangan, Rest Kupfer beschrieben, die bereits für die Herstellung hochfester Brillenteile verwendet wird. Diese bekannte Legierung wird nach einer Lösungsglühung bei 820°C zunächst abgeschreckt, dann einer Kaltverformung unterzogen und abschliessend zur Festigkeitssteigerung bei 400°C für 2 bis 10 Stunden ausgehärtet. Wird dieses Material nun nach einer hohen Kaltverformung bei 400°C ausgehärtet, so steigt die Vickershärte kontinuierlich mit der Aushärtungszeit beträchtlich an. Bereits ab einer Vickershärte von 400 beginnt dieses Material jedoch nachteiligerweise zu verspröden, wobei es dann bei Biegebeanspruchungen sehr leicht bricht. Eine weitere Härtesteigerung ist zwar möglich, jedoch bringt diese aufgrund der hohen Versprödungsneigung des Materials keine Vorteile für die beabsichtigte Anwendung. Die Versprödungsneigung der Kupfer-Nickel-Mangan-Legierung wird dabei durch ausgeprägte diskontinuierliche Ausscheidungen an den Korngrenzen hervorgerufen. In diesem Zusammenhang wird auf Legierungen aus Kupfer mit 1 bis 2 Gew.% Beryllium hingewiesen, die sich durch eine spät einsetzende Versprödung auszeichnen. Jedoch weisen diese Legierungen wegen der Toxität des Berylliums bei der Verarbeitung des Materials erhebliche Probleme auf.

Durch die US-PS 2 234 552 ist eine aushärtbare Kupfer-Nickel-Mangan-Legierung als besonders harter Werkstoff bekannt geworden, bei der zur Verbesserung bestimmter Eigenschaften Zusätze von Zinn, Silber, Silizium, Bor und Chrom beigegeben werden. Insbesondere bei hohem Kupfergehalt soll durch die Zugabe von Beryllium bis zu 1 Gew.% die Aushärtungstemperatur zu etwas niedrigeren Temperaturen verschoben werden.

Aufgabe der vorliegenden Erfindung ist es, eine Brillenlegierung mit verbesserten mechanischen Eigenschaften, insbesondere hinsichtlich der Duktilität, zur Verfügung zu stellen.

Die erfindungsgemässe Lösung dieser Aufgabe besteht in der Verwendung einer aushärtbaren Kupfer-Nickel-Mangan-Legierung, die aus 15 bis 25 Gew.% Nickel, 15 bis 25 Gew.% Mangan, bis zu 5 Gew.% Kobalt, 0,05 bis 1,0 Gew.% Beryllium, Rest Kupfer einschliesslich geringer Desoxidations- und Verarbeitungszusätze mit einem feinkörnigen Gefüge mit einer maximalen Korngrösse von 0,015 mm, die zur Festigkeitssteigerung einer Aushärtungsbehandlung im Temperaturbereich von 300 bis 500°C unterzogen wurde, als Werkstoff zur Herstellung von Brillenteilen.

Überraschend ist bei den erfindungsgemäss zu verwendenden Kupfer-Nickel-Mangan-Legierungen insbesondere deren extreme Feinkörnigkeit des Gefüges, durch die eine Versprödung vermieden wird. Die Aushärtungsbehandlung wird damit völlig unkritisch und zudem zeichnet sich der Werkstoff durch eine leichtere Verarbeitbarkeit und durch eine hohe Oberflächengüte aus. Die Kornfeinung wird durch den relativ geringen Berylliumzusatz bewirkt, wobei das Beryllium während der Homogenisierungsglühung nicht in Lösung geht, sondern zu einer Ausscheidung von sehr feinen und gleichmässig verteilten Nickel-Beryllium-Teilchen führt.

Es wird angenommen, dass die Nickel-Beryllium-Teilchen bei der Rekristallisation zuerst als Keimstellen wirken und anschliessend nach erfolgter Rekristallisation das Kornwachstum behindern. Eine Kornvergröberung wurde auch nach längerer Wärmebehandlung nicht beobachtet. Der durchschnittliche Korngrössenbereich liegt bei der erfindungsgemäss zu verwendenden Legierung zwischen 0,008 und 0,012 mm, wobei ein Maximalwert von höchstens 0,015 mm auftritt. Aufgrund der relativ trägen Aushärtungscharakteristik aus dem weichen Zustand kann für Kupfer-Nickel-Mangan-Legierungen mit einem Nickel- bzw. Mangangehalt kleiner als 18 Gew.% für die Weichglühung statt der bisher üblichen Durchlaufglühung sogar die kostengünstigere stationäre Glühung, beispielsweise in einem Haubenofen, angewendet werden.

In weiteren Untersuchungen hat es sich ferner herausgestellt, dass es günstig ist, den Mangangehalt der Legierung ganz oder teilweise durch Zinn zu ersetzen, wobei der Zinngehalt 8 Gew.% nicht übersteigen sollte. Hierdurch wird eine Erniedrigung des Elastizitätsmoduls erreicht, was bei federnden Brillenteilen besonders wünschenswert ist.

Weitere Verbesserungen, insbesondere hinsichtlich der mechanischen Eigenschaften der erfindungsgemäss zu verwendenden Legierung ergeben sich, wenn dem Ausgangswerkstoff auf Kosten des Kupfergehaltes bis zu 5 Gew.% Eisen und/oder Zink und weiterhin bis zu 3 Gew.% mindestens eines Elementes aus der Gruppe Aluminium, Silizium, Titan und Chrom und/oder bis zu 1 Gew.% mindestens eines Elementes aus der Gruppe Zirkon, Niob, Vanadium, Molybdän und Wolfram zugegeben wird.

Vorzugsweise wird die erfindungsgemäss zu verwendende Legierung zunächst bei 700 bis 900°C zur Homogenisierung der Bestandteile geglüht und dann einer mindestens 50%igen Querschnittsverringerung unterzogen. Anschliessend wird die Legierung im Temperaturbereich von 350 bis 450°C zur Aushärtung 0,5 bis 20 Stunden lang wärmebehandelt.

Anhand von zwei Figuren und einigen Ausführungsbeispielen wird die Erfindung im folgenden noch näher erläutert:

Fig. 1 zeigt die Abhängigkeit der Härtesteigerung von der Aushärtungszeit für eine bei 400°C wärmebehandelte erfindungsgemäss zu verwendende Legierung.

Fig. 2 stellt ein Schliffbild einer erfindungsgemäss zu verwendenden Legierung in 400-facher Vergrösserung dar.

Der Einfluss der Wärmebehandlung auf die wesentlichen mechanischen Eigenschaften und die maximale Korngrösse werden im folgenden an fünf Legierungen unterschiedlicher Zusammensetzung beispielhaft dargestellt. Die Zusammensetzung dieser Legierungen ist in Tabelle 1 jeweils in Gew.% angegeben.

Tabelle 1

| Leg. | Zusammensetzung in Gew.% | | | | | |
|------|------|------|------|------|------|------|
|      | Ni   | Mn   | Co   | Be   | Sn   | Cu   |
| 1    | 15,0 | 15,0 | –    | 0,5  | –    | Rest |
| 2    | 17,5 | 17,5 | –    | 0,2  | –    | Rest |
| 3    | 25,0 | 25,0 | –    | 0,2  | –    | Rest |
| 4    | 25,0 | 22,0 | 3,0  | 0,2  | –    | Rest |
| 5    | 15,0 | 1,0  | –    | 0,2  | 6,0  | Rest |

Die Legierungen wurden in üblicher Weise im Vakuum erschmolzen. Nach einer Homogenisierungsglühung wurden die Blöcke bei 850°C auf eine Dicke von 5,3 mm heissgewalzt und dann teilweise unter Einschaltung von Zwischenglühungen einer querschnittsverringernden Bearbeitung auf eine Enddicke von 2,2 mm unterzogen. Die Legierungen 1 und 2 wurden stationär in einem Haubenofen 0,5 Stunden bei 750°C geglüht und unter Wasserstoffatmosphäre auf Raumtemperatur abgekühlt, wobei die Abkühlbedingungen unkritisch waren und eine schroffe Abschreckung nicht erforderlich ist. Die Legierungen 3 bis 5 wurden im Durchlaufofen geglüht und in Wasser abgeschreckt. An Vergleichsproben wurde festgestellt, dass weder nach einer Durchlaufglühung noch nach stationärer Glühung ein Kornwachstum eingesetzt hatte und die maximale Korngrösse nicht grösser als 0,015 mm war.

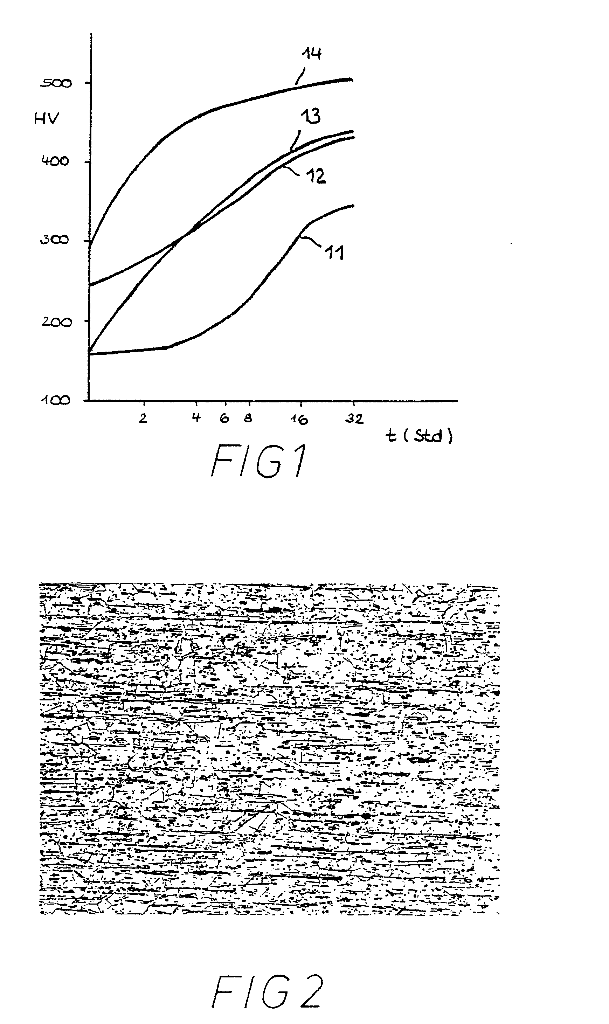

Die Vickershärte wurde an verschiedenen Legierungen nach etwa 50%iger Kaltverformung und nach Aushärtung bei Temperaturen zwischen 350 und 450°C geprüft. Die weiteren mechanischen Eigenschaften sowie die jeweilige Korngrösse wurden im Zustand «hart» (50% kaltverformt) sowie nach Aushärtung bei unterschiedlichen Temperaturen ermittelt. Eine Auswahl von Messergebnissen ist in Fig. 1 dargestellt und in Tabelle 2 aufgeführt.

Aus Fig. 1 ergibt sich der Aushärtungsverlauf für zwei verschiedene Kupfer-Nickel-Mangan-Legierungen mit Berylliumzusatz. Hierbei ist in Kurve 11 insbesondere die sehr träge Aushärtung der Legierung 2 aus dem weichen Zustand deutlich zu erkennen. Im Vergleich hierzu zeigt Kurve 12 das Aushärtungsverhalten der Legierung 2 nach 50%iger Kaltverformung. Ebenfalls dargestellt sind die Härtewerte der Legierung 4 in weichem Zustand (Kurve 13) sowie nach 50%iger Kaltverformung (Kurve 14). Beide erfindungsgemäss zu verwendenden Legierungen erreichen ohne zu verspröden insgesamt höhere Vickershärten als die bekannte berylliumfreie Kupfer-Nickel-Mangan-Legierung.

In den einzelnen Spalten der Tabelle 2 sind die Legierungsnummer (entsprechend der Bezeichnung in Tabelle 1), die Temperatur sowie die Dauer der zur Aushärtung verwendeten Wärmebehandlung angegeben. Die weiteren Spalten enthalten die Zugfestigkeit, die Streckgrenze sowie die Vickershärte HV. Als Mass für die Feinkörnigkeit der untersuchten Legierung ist in der letzten Spalte der Tabelle 2 die maximale Korngrösse in mm angegeben.

Tabelle 2

| Leg. | Wärmebehandlung | | $R_m$ (N/mm²) | $R_p0,2$ (N/mm²) | Vickershärte | Korngrösse (mm) |
|------|-----------|-------------|------|------|------|-------|
|      | Temp. (°C) | Dauer (Std.) | | | | |
| 1 | 400 | 16 | 1450 | 1420 | 405 | 0,008 |
| 2 | – | – | 960 | 880 | 255 | 0,010 |
| 2 | 400 | 2 | 1370 | 1300 | 395 | 0,010 |
| 2 | 400 | 16 | 1500 | 1450 | 437 | 0,010 |
| 2 | 450 | 8 | 1460 | 1400 | 420 | 0,010 |
| 3 | 400 | 4 | 1700 | 1680 | 470 | 0,015 |
| 4 | 400 | 4 | 1610 | 1500 | 460 | 0,015 |
| 4 | 450 | 2 | 1620 | 1570 | 460 | 0,015 |
| 5 | 375 | 2 | 1220 | 1200 | 380 | 0,015 |

Aus Tabelle 2 ist insbesondere zu ersehen, dass die jeweilige maximale Korngrösse völlig unabhängig von der Dauer und der Temperatur der Aushärtungsbehandlung für jede Legierung konstant bleibt. Diese durch die Kornfeinung erreichte Eigenschaft erlaubt es, die erfindungsgemäss zu verwendenden Legierungen maximal auszuhärten, ohne dass eine Versprödung auftritt. Insgesamt kann daher die an sich bekannte Aushärtungsfähigkeit der Kupfer-Nickel-Mangan-Legierung in vorteilhafter Weise voll ausgenutzt werden.

In einem Schliffbild (Fig. 2) ist der feinkörnige Gefügezustand der Legierung 2 in 400-facher Vergrösserung dargestellt.

Deutlich ist die durch den Berylliumzusatz begründete Teilchendispersion von Nickel-Berylliden mit der sehr gleichmässigen und feinen Verteilung von ausgeschiedenen Teilchen zu erkennen. Die maximale Korngrösse der ausgeschiedenen Teilchen betrug in diesem Fall 0,001 mm.

Ergänzende Untersuchungen ergaben bei den erfindungsgemäss zu verwendenden Legierungen sowohl eine ausgezeichnete Löt bzw. Schweissbarkeit als auch eine hervorragende Korrosionsbeständigkeit gegenüber künstlichem Schweiss, so dass diese Legierungen sämtliche Anforderungen hinsichtlich eines geeigneten Werkstoffs für die Herstellung von Brillenteilen erfüllen.

## Patentansprüche

1. Verwendung einer aushärtbaren Kupfer-Nickel-Mangan-Legierung aus 15 bis 25 Gew.% Nickel, 15 bis 25 Gew.% Mangan, bis zu 5 Gew.% Kobalt, 0,05 bis 0,5 Gew.% Beryllium, Rest Kupfer, einschliesslich geringer Desoxidations- und Verarbeitungszusätze mit einem feinkörnigen Gefüge mit einer maximalen Korngrösse von 0,015 mm, die zur Festigkeitssteigerung einer Aushärtungsbehandlung im Temperaturbereich von 300 bis 500°C unterzogen wurde, als Werkstoff zur Herstellung von Brillenteilen.

2. Verwendung einer Legierung gemäss Anspruch 1, dadurch gekennzeichnet, dass der Mangangehalt der Legierung ganz oder teilweise durch bis zu 8 Gew.% Zinn ersetzt ist, für den in Anspruch 1 genannten Zweck.

3. Verwendung einer Legierung gemäss Anspruch 1 oder 2, bei der auf Kosten des Kupfergehaltes bis zu 5 Gew.% Eisen und/oder Zink ersetzt ist, für den in Anspruch 1 genannten Zweck.

4. Verwendung einer Legierung gemäss einem der Ansprüche 1 bis 3, bei der auf Kosten des Kupfergehaltes bis zu 3 Gew.% mindestens eines Elementes aus der Gruppe Aluminium, Silizium, Titan und Chrom und/oder bis zu 1 Gew.% mindestens eines Elementes aus der Gruppe Zirkon, Niob, Vanadium, Molybdän und Wolfram ersetzt ist, für den in Anspruch 1 genannten Zweck.

5. Verwendung einer Legierung gemäss einem der Ansprüche 1 bis 4, dadurch gekennzeichnet, dass die Legierung zunächst bei 700 bis 900°C geglüht, dann um mindestens 50% kaltverformt und anschliessend einer 0,5- bis 20-stündigen Aushärtungsbehandlung bei 350 bis 450°C unterworfen wird, für den in Anspruch 1 genannten Zweck.

## Claims

1. Use of a precipitation-hardenable copper/ nickel/manganese alloy of 15 to 25% by weight of nickel, 15 to 25% by weight of manganese, up to 5% by weight of cobalt, 0,05 to 0,5% by weight of beryllium, remainder copper, including small deoxidizing and processing additions with a fine-grained structure with a maximum grain size of 0.015 mm, which was subjected to a precipitation-hardening treatment in the temperature range from 300 to 500°C to increase the strength, as a material for producing spectacle parts.

2. Use of an alloy according to Claim 1, characterised in that the manganese content of the alloy is replaced wholly or partly by up to 8% by weight of tin, for the purpose mentioned in Claim 1.

3. Use of an alloy according to Claim 1 or 2, in which, at the expense of the copper content, up to 5% by weight of iron and/or zinc is substituted, for the purpose mentioned in Claim 1.

4. Use of an alloy according to one of the Claims 1 to 3, in which, at the expense of the copper content, up to 3% by weight of at least one element from the group comprising aluminium, silicon, titanium and chromium and/or up to 1% by weight of at least one element from the group comprising zirconium, niobium, vanadium, molybdenum and tungsten is substituted, for the purpose mentioned in Claim 1.

5. Use of an alloy according to one of the Claims 1 to 4, characterised in that the alloy is first annealed at 700 to 900°C, then cold-worked by at least 50% and then subjected to a 0.5- to 20-hour precipitation-hardening treatment at 350 to 450°C, for the purpose mentioned in Claim 1.

## Revendications

1. Utilisation, comme matériau pour la fabrication de composants pour lunettes, d'un alliage durcissable cuivre-nickel-manganèse, composé de 15 à 25% en poids de nickel, 15 à 25% en poids de manganèse, jusqu'à 5% en poids de cobalt, 0,05 à 0,5% en poids de béryllium, le reste étant constitué de cuivre, y compris de faibles quantités d'additifs de désoxydation et d'usinage, alliage comportant une structure à grains fins ayant une taille maximale de grain égale à 0,015 mm, que l'on a soumis, pour accroître la résistance mécanique, à un traitement de durcissement dans l'intervalle de température allant de 300 à 500°C.

2. Utilisation d'un alliage selon la revendication 1, caractérisée e ce que, dans le but mentionné dans la revendication 1, on remplace en partie ou en totalité la teneur en manganèse de l'alliage par jusqu'à 8% en poids d'étain.

3. Utilisation d'un alliage selon la revendication 1 ou 2, dans lequel on ajoute, dans le but mentionné dans la revendication 1, aux dépens de la teneur en cuivre, jusqu'à 5% en poids de fer et/ou de zinc.

4. Utilisation d'un alliage selon l'une quelconque des revendications 1 à 3, dans lequel on ajoute, dans le but mentionné dans la revendication 1, aux dépens de la teneur en cuivre, jusqu'à 3% en poids d'au moins un élément choisi parmi l'aluminium, le silicium, le titane et le chrome, et/ou jusqu'à 1% en poids d'au moins un élément choisi parmi le zirconium, le niobium, le vanadium, le molybdène et le tungstène.

5. Utilisation d'un alliage selon l'une quelconque des revendications 1 à 4, caractérisé en ce qu'un premier lieu on recuit l'alliage à 700-900°C, puis on le déforme à froid à 50% et on le soumet ensuite à un traitement de durcissement de 0,5 à 20 heures à 350-450°C, dans le but mentionné dans la revendication 1.

FIG 1

FIG 2